# EUROPÄISCHE PATENTSCHRIFT

(11) **EP 2 340 462 B1**
(45) Veröffentlichungstag und Bekanntmachung des Hinweises auf die Patenterteilung: **05.09.2012**
(21) Anmeldenummer: 09736911.0
(22) Anmeldetag: 13.10.2009
(51) Int. Cl.: G03B 42/04

(54) **VERFAHREN ZUM AUSLESEN EINER SPEICHERLEUCHTSTOFFPLATTE**
METHOD FOR READING OUT A PHOSPHOR STORAGE PLATE
PROCÉDÉ DE LECTURE D'UNE PLAQUE DE SUBSTANCE LUMINESCENTE D'ENREGISTREMENT

(30) Priorität: 21.10.2008 EP 08167136
(43) Veröffentlichungstag der Anmeldung: 06.07.2011
(73) Patentinhaber: Agfa HealthCare N.V., 2640 Mortsel (BE)
(72) Erfinder: PIRMANN, Anton, 81243 München (DE)
(74) Vertreter: Linsmeier, Josef
(86) Internationale Anmeldenummer: PCT/EP2009/063340
(87) Internationale Veröffentlichungsnummer: WO 2010/046278

(56) Entgegenhaltungen:
- JP-A- 7 036 131
- JP-A- 2000 039 683
- JP-A- 2000 241 920
- JP-A- 2002 182 322
- JP-A- 2003 195 435
- JP-A- 2006 106 186

## Beschreibung

Die vorliegende Erfindung betrifft ein Verfahren zum Auslesen einer in einer Röntgenkassette befindlichen Speicherleuchtstoffplatte.

In der Radiografie wird für diagnostische Zwecke von einem Objekt mittels Röntgenbestrahlung ein Bild erzeugt, das in einer Speicherleuchtstoffschicht als latentes Röntgenbild abgespeichert wird. Ein solches Röntgenbild enthält somit Bildinformationen über das Objekt. Die Aufnahme von Röntgenbildern wird insbesondere im medizinischen Bereich und im Bereich der zerstörungsfreien Prüfung (non-destructive testing, NDT) von Objekten, wie z. B. einer Schweißnaht, eingesetzt. Zum Auslesen der in der Speicherleuchtstoffschicht abgespeicherten Bildinformationen wird die Speicherleuchtstoffschicht in einer Auslesevorrichtung mittels einer Bestrahlungseinrichtung angeregt. Die Speicherleuchtstoffschicht emittiert aufgrund dieser Anregung Emissionsstrahlung, die eine Intensität entsprechend der Menge der in der Speicherleuchtstoffschicht abgespeicherten Bildinformationen des Röntgenbildes aufweist. Die von der Speicherleuchtstoffschicht ausgesandte Emissionsstrahlung wird von einem Detektor erfasst und in elektrische Signale gewandelt, die ein Abbild der Bildinformationen enthalten. Die elektrischen Signale werden weiterverarbeitet und die in der Speicherleuchtstoffschicht abgespeicherten Bildinformationen anschließend sichtbar gemacht. Die Bildinformationen können zur weiteren Auswertung beispielsweise direkt auf einem Monitor dargestellt oder mittels eines speziell für Röntgenbilder verwendbaren Druckers auf einen fotografischen Röntgenfilm geschrieben werden.

Die Speicherleuchtstoffschicht ist auf einer Trägerschicht aufgebracht, die zusammen eine Speicherleuchtstoffplatte bilden. Die Speicherleuchtstoffplatte befindet sich zur Handhabung üblicherweise geschützt in einer Röntgenkassette, die zum Auslesen der in der Speicherleuchtstoffschicht abgespeicherten Bildinformationen in die Auslesevorrichtung eingeführt wird. Die Speicherleuchtstoffplatte wird in der Auslesevorrichtung aus der Röntgenkassette entnommen. Dazu weist die Röntgenkassette eine Öffnung auf, durch welche die in der Röntgenkassette befindliche Speicherleuchtstoffplatte aus der Röntgenkassette heraus und die außerhalb der Röntgenkassette befindliche Speicherleuchtstoffplatte in die Röntgenkassette hinein befördert werden kann.

Es ist die Aufgabe der vorliegenden Erfindung, den Einsatzbereich einer Röntgenkassette zu erweitern und ein komfortables und sicheres Aufnehmen von einer Speicherleuchtstoffplatte in der Röntgenkassette zu ermöglichen.

Diese Aufgabe wird gemäß der technischen Lehre des Anspruchs 1 gelöst.

Die Röntgenkassette umfasst eine Aufnahmevorrichtung zur Aufnahme mindestens einer Speicherleuchtstoffplatte, wobei die Aufnahmevorrichtung derart ausgestaltet ist, dass die Speicherleuchtstoffplatte während eines Auslesens der Speicherleuchtstoffplatte in einer Auslesevorrichtung in der Aufnahmevorrichtung verbleiben und nach dem Auslesen aus der Aufnahmevorrichtung entnommen werden kann, und umfasst des Weiteren eine erste und eine zweite Öffnung, wobei die Aufnahmevorrichtung zusammen mit der mindestens einen aufgenommenen Speicherleuchtstoffplatte von einer Bedienperson durch die erste Öffnung hindurch in die Röntgenkassette eingeführt werden kann und durch die zweite Öffnung hindurch aus der Röntgenkassette entnommen und ins Innere der Ausleseeinrichtung transportiert werden kann, wenn die Röntgenkassette mit der zweiten Öffnung in der Auslesevorrichtung eingegeben ist.

Die Aufnahmevorrichtung ermöglicht die Aufnahme von Speicherleuchtstoffplatten, die nicht eine der jeweiligen Röntgenkassette entsprechende Standardgröße aufweisen. Dadurch ist es möglich, verschiedenste Speicherleuchtstoffplatten in beliebiger Größe und/oder Geometrie in einer Standard-Röntgenkassette aufzunehmen. Durch die entsprechende Ausgestaltung der Aufnahmevorrichtung ist es darüber hinaus möglich, diese zusammen mit den auszulesenden Speicherleuchtstoffplatten durch die Auslesevorrichtung zu transportieren, wodurch einerseits ein sicherer und störungsfreier Transport der aufgenommenen Speicherleuchtstoffplatten und andererseits ein zuverlässiges Auslesen der Speicherleuchtstoffplatten gewährleistet wird. Die Aufnahmevorrichtung kann durch eine Bedienperson aus der Röntgenkassette entnommen werden, wodurch ein Bestücken der Aufnahmevorrichtung mit auszulesenden Speicherleuchtstoffplatten bzw. deren Entnahme aus der Aufnahmevorrichtung nach dem Auslesen auf einfache Weise ermöglicht wird.

Darüber hinaus weist die Röntgenkassette zwei Öffnungen zum Einführen der Aufnahmevorrichtung in die Röntgenkassette und zum Herausnehmen aus der Kassette auf. Dadurch ist es vorteilhafterweise möglich, eine Öffnung, z.B. an einer Stirnseite der Röntgenkassette, speziell für die Entnahme und Rückführung der Aufnahmevorrichtung in einer Auslesevorrichtung auszugestalten und die andere Öffnung, z.B. im Bereich einer breiten Seite der Röntgenkassette, für das Einlegen und Entnehmen der Aufnahmevorrichtung durch eine Bedienperson möglichst ergonomisch zu gestalten. Dadurch wird neben einer komfortablen und sicheren Aufnahme verschiedenster Speicherleuchtstoffplatten in der Röntgenkassette eine flexible Verwendbarkeit bei medizinischen, z.B. zahnmedizinischen, und nicht-medizinischen Anwendungen, z.B. NDT, erreicht. Vorzugsweise sind zwei Verschlüsse zum Verschließen der beiden Öffnungen vorhanden.

Das System weist eine Röntgenkassette und eine Auslesevorrichtung zum Auslesen der in der Aufnahmevorrichtung aufgenommenen Speicherleuchtstoffplatte auf. Dabei weist die Auslesevorrichtung eine Eingabeeinrichtung zum Eingeben der Röntgenkassette auf. Diese Eingabeeinrichtung ist so ausgestaltet, dass in dem Fall, in dem die Röntgenkassette mit der einen ihrer Öffnungen in die Eingabeeinrichtung eingegeben ist, die andere der Öffnungen der Röntgenkassette für eine Bedienperson zugänglich ist. Dadurch ist es vorteilhafterweise möglich, den Einsatzbereich des Systems, insbesondere seiner Auslesevorrichtung zu erweitern. Die Bedienperson kann die mit einer Öffnung in der Auslesevorrichtung steckende Röntgenkassette auf einfache und komfortable Weise über die andere Öffnung mit ein oder mehreren Speicherleuchtstoffplatten be- und entladen. Dies kann für bestimmte Anwendungen, insbesondere im zahnmedizinischen Bereich oder bei NDT, vorteilhaft sein.

Das erfindungsgemäße Verfahren zum Auslesen von Speicherleuchtstoffplatten umfasst folgende Schritte: Bestücken einer, vorzugsweise außerhalb der Röntgenkassette befindlichen, Aufnahmevorrichtung mit mindestens einer Speicherleuchtstoffplatte und Einführen der bestückten Aufnahmevorrichtung in eine Röntgenkassette durch eine erste Öffnung der Röntgenkassette hindurch; Entnahme der bestückten Aufnahmevorrichtung aus der Röntgenkassette durch eine zweite Öffnung der Röntgenkassette, welche in einer Auslesevorrichtung eingegeben ist, hindurch und Auslesen der in der entnommenen Aufnahmevorrichtung befindlichen Speicherleuchtstoffplatte; Rückführen der bestückten Aufnahmevorrichtung in die in der Auslesevorrichtung eingegeben Röntgenkassette durch die zweite Öffnung der Röntgenkassette hindurch; Entnahme der Aufnahmevorrichtung aus der Röntgenkassette durch die erste Öffnung der Röntgenkassette hindurch und Entnahme der ausgelesenen Speicherleuchtstoffplatte aus der Aufnahmevorrichtung. Bei diesem Arbeitsablauf kann einerseits das Bestücken der Aufnahmevorrichtung mit Speicherleuchtstoffplatten, Einführen und Entnehmen der bestückten Aufnahmevorrichtung in die bzw. aus der Röntgenkassette sowie Entnehmen der ausgelesenen Speicherleuchtstoffplatten aus der Aufnahmevorrichtung auf komfortable Weise erfolgen. Darüber hinaus wird ein sicherer Transport mehrerer Speicherleuchtstoffplatten in der Auslesevorrichtung sowie ein zuverlässiges Auslesen der Speicherleuchtstoffplatten gewährleistet.

In einer vorteilhaften Ausgestaltung sind die beiden Öffnungen an verschiedenen Außenflächen der Kassette ausgebildet. Dies gewährleistet eine besonders hohe Verwendbarkeit der Röntgenkassette für verschiedene Einsatzbereiche. Die Zugänglichkeit zum Innern der Röntgenkassette wird vorteilhafterweise weiter verbessert.

Die Röntgenkassette weist vier schmale Seitenflächen, im Folgenden auch Frontflächen genannt, und zwei breite Seitenflächen, im Folgenden auch Deckelflächen genannt, auf. In einer weiteren vorteilhaften Ausgestaltung ist eine der Öffnungen an einer Frontfläche der Röntgenkassette ausgebildet. Dadurch ist die Röntgenkassette gut an bereits bestehende Auslesevorrichtungen angepasst, die Speicherleuchtstoffplatten über eine solche Öffnung in der Frontfläche in die Röntgenkassette hinein und aus ihr heraus führen.

In einer besonders bevorzugten Ausgestaltung ist eine der Öffnungen an einer Deckelfläche der Röntgenkassette ausgebildet. Dies gewährleistet vorteilhafterweise, insbesondere für eine Bedienperson, einen besonders guten Zugang zum Innern der Röntgenkassette. Dies gilt vor allem für den Fall, in dem diese in der Auslesevorrichtung steckt.

In einer besonders bevorzugten Ausgestaltung ist der Verschluss zum Verschließen der an der Deckelfläche ausgebildeten Öffnung mittels eines abnehmbaren Kassettenteils realisiert. Ein solcher Verschluss ist einfach herstellbar und, insbesondere von der Bedienperson, einfach handhabbar.

Alternativ kann der Verschluss zum Verschließen der an der Deckelfläche ausgebildeten Öffnung mittels eines entlang der Deckelfläche der Röntgenkassette verschiebbaren Kassettenteils realisiert werden. Ein solcher Verschluss ist ebenfalls einfach herstellbar und, insbesondere von der Bedienperson, einfach handhabbar. Ferner ist der Verschluss in seinem geöffneten Zustand besonders platzsparend an der Röntgenkassette angebracht.

Bei einer weiteren alternativen Ausgestaltung ist der Verschluss zum Verschlie-βen der an der Deckelfläche ausgebildeten Öffnung mittels eines verschwenkbaren Kassettenteils realisiert. Ein solcher Verschluss ist besonders einfach herstellbar und, insbesondere von der Bedienperson, sehr einfach und zuverlässig handhabbar.

In einer weiteren vorteilhaften Ausgestaltung ist im Bereich einer Verschlusskante, an welcher eine Seitenfläche der Röntgenkassette und ein Verschluss einer Öffnung im geschlossenen Zustand aufeinander treffen, eine Blende oder ein Überlapp, in welchem sich der Verschluss und die Seitenfläche der Röntgenkassette teilweise überlappen, vorgesehen, wobei durch die Blende bzw. den Überlapp die Verschlusskante lichtdicht abdeckt wird. Durch das dadurch gewährleistete besonders gute lichtdichte Verschließen der Röntgenkassette sind besonders gute Ergebnisse beim Auslesen der Röntgeninformationen aus der Speicherleuchtstoffplatte möglich.

Vorzugsweise ist wenigstens einer der Verschlüsse mittels einer Feder, insbesondere einer Rastfeder, verschließbar. Eine solche Feder gewährleistet vorteilhafterweise ein einfaches und zuverlässiges Verschließen und Öffnen des wenigstens einen Verschlusses. Ferner ist ein solcher Verschluss besonders einfach herstellbar.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische Darstellung eines Ausführungsbeispiels eines Systems mit einer Röntgenkassette, die eine Öffnung aufweist, und einer Auslesevorrichtung zum Auslesen einer Speicherleuchtstoffplatte,
- Fig. 2: eine schematische Darstellung eines Ausführungsbeispiels eines Systems mit einer Röntgenkassette, die zwei Öffnungen aufweist, und der Auslesevorrichtung zum Auslesen einer Speicherleuchtstoffplatte,
- Fig. 3: eine schematische Darstellung eines Ausführungsbeispiels einer Röntgenkassette mit einem abnehmbaren Deckelteil als Verschluss für eine ihrer Öffnungen,
- Fig. 4: eine schematische Darstellung eines Schnitts durch die Röntgenkassette nach Fig. 3,
- Fig. 5A, B: schematische Darstellungen einer Verschlussfeder zum Verschlie-βen des abnehmbaren Deckelteils der Röntgenkassette nach Fig. 3,
- Fig. 6A, B: schematische Darstellungen eines Ausführungsbeispiels einer Röntgenkassette mit einem verschiebbaren Deckelteil als Verschluss für eine ihrer Öffnungen,
- Fig. 7A, B: schematische Darstellungen eines Ausführungsbeispiels einer Röntgenkassette mit einem verschwenkbaren Deckelteil als Verschluss für eine ihrer Öffnungen,
- Fig. 8: eine schematische Darstellung einer Draufsicht auf ein Ausführungsbeispiel einer Aufnahmevorrichtung mit mehreren Aufnahmeräumen für symmetrische Speicherleuchtstoffplatten,
- Fig. 9: eine schematische Darstellung eines Querschnitts der Aufnahmevorrichtung nach Fig. 8,
- Fig. 10A, B: schematische Darstellungen von perspektivischen Ansichten der Aufnahmevorrichtung nach Fig. 8 ohne bzw. mit aufgenommenen Speicherleuchtstoffplatten und
- Fig. 11: eine weitere schematische Darstellung der Röntgenkassette nach Fig. 3 mit einer in ihrem Innern befindlichen Aufnahmevorrichtung nach Fig. 8,
- Fig. 12: eine schematische Darstellung einer Draufsicht auf ein Ausführungsbeispiel einer Aufnahmevorrichtung mit einem einzigen Aufnahmeraum für eine asymmetrische Speicherleuchtstoffplatte.

Im Folgenden werden, sofern nicht anders angegeben, für gleiche oder gleichwirkende Elemente gleiche Bezugszeichen verwendet.

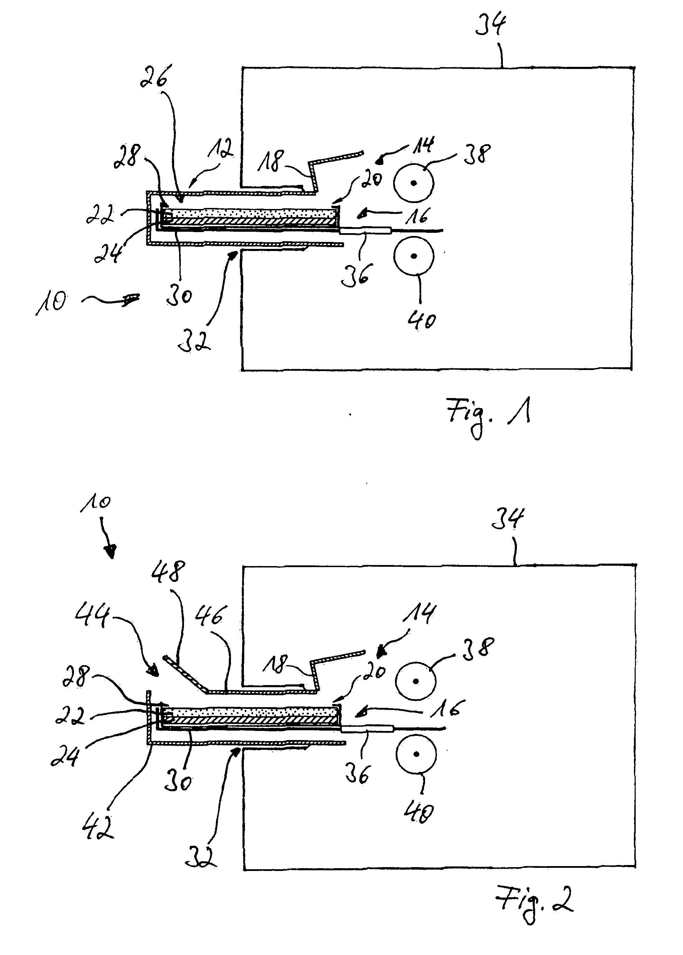

Fig. 1 zeigt ein System 10 mit einer Röntgenkassette 12, die eine Öffnung 14 aufweist. Die Öffnung 14 ist hier an einer schmalen Frontfläche 16 der Röntgenkassette 12 ausgebildet. Zum Öffnen und Schließen der Öffnung 14 weist die Röntgenkassette 12 einen verschwenkbaren Verschluss 18 auf. Im Innern der Röntgenkassette 12 befindet sich eine Speicherleuchtstoffplatte 20, die durch die Öffnung 14 aus der Röntgenkassette 12 hinaus und von außerhalb der Röntgenkassette 12 in diese hinein transportiert werden kann. Die Röntgenkassette 12 enthält eine Speicherleuchtstoffschicht 22 zum Speichern von Röntgeninformationen und eine Trägerschicht 24, auf der die Speicherleuchtstoffschicht 22 aufgebracht ist. Die Speicherleuchtstoffplatte 20 ist in einem Aufnahmeraum 26 einer Aufnahmevorrichtung 28 angeordnet, in der die Speicherleuchtstoffplatte 20 sicher gehalten wird. Die Speicherleuchtstoffplatte 20 liegt innerhalb der Röntgenkassette 12 auf einer herausziehbaren Schublade 30.

Die Röntgenkassette 12 steckt in einer Eingabeeinrichtung 32 einer Auslesevorrichtung 34 zum Auslesen der in der Röntgenkassette 12 befindlichen Speicherleuchtstoffplatte 20. Die Auslesevorrichtung 34 enthält eine Einrichtung zum Öffnen und Schließen des Verschlusses 18 der Röntgenkassette 12. Die Auslesevorrichtung 34 enthält ferner eine Entnahmeeinrichtung 36, die bei geöffnetem Verschluss 18 am Rand der Schublade 30 angreift und diese zusammen mit der darauf liegenden Speicherleuchtstoffplatte 20 aus der Röntgenkassette 12 hinaus in Richtung zweier übereinander angeordneter Transportwalzen 38 und 40 zieht. Die Transportwalzen 38, 40 erfassen die in der Aufnahmevorrichtung 28 befindliche Speicherleuchtstoffplatte 20 und transportieren sie zur weiteren Verarbeitung weiter ins Innere der Auslesevorrichtung 34. Nach dem Auslesen von in der Speicherleuchtstoffschicht 22 gespeicherten Röntgeninformationen wird die Speicherleuchtstoffplatte 20 wieder zurück in die Röntgenkassette 12 transportiert. Während der Verarbeitung innerhalb der Auslesevorrichtung 34 verbleibt die Speicherleuchtstoffplatte 20 in der Aufnahmevorrichtung 28. Die Auslesevorrichtung 34 ist prinzipiell bekannt und wird daher im Einzelnen nicht weiter beschrieben. Es wird diesbezüglich insbesondere auf den oben beschriebenen allgemeinen Stand der Technik verwiesen.

Fig. 2 zeigt das System 10 mit einer Röntgenkassette 42, die zwei Öffnungen aufweist. Neben der Öffnung 14 an ihrer Frontfläche 16 hat die Röntgenkassette 42 eine Öffnung 44 an ihrer Deckelfläche 46. Innerhalb der Röntgenkassette 42 befindet sich die Speicherleuchtstoffplatte 20. Diese kann durch die Öffnung 44 aus der Röntgenkassette 12 hinaus und von außerhalb der Röntgenkassette 12 in diese hinein transportiert werden. Die Öffnung 44 ist durch einen Verschluss 48 öffen- und verschließbar, der hier verschwenkbar ist. Die Röntgenkassette 42 steckt mit ihrer Öffnung 14 in der Eingabeeinrichtung 32 der Auslesevorrichtung 34. In dieser Position ragt die Öffnung 44 aus der Eingabeeinrichtung 32 hinaus und ist insbesondere für eine Bedienperson zugänglich. Vorteilhafterweise kann die Bedienperson den Verschluss 48 betätigen und bei Bedarf die Speicherleuchtstoffplatte 20 in die Röntgenkassette 42 hineinführen oder aus ihr herausnehmen, während sie in der Eingabeeinrichtung 32 steckt. Im vorliegenden Ausführungsbeispiel nach Fig. 2 befindet sich die Speicherleuchtstoffplatte 20 in der Aufnahmevorrichtung 28. Für das Ausnutzen der Vorteile der Röntgenkassette 42 mit ihren zwei Öffnungen 14 und 44 benötigt die Speicherleuchtstoffplatte 20 allerdings nicht notwendigerweise die Aufnahmevorrichtung 28. Vielmehr kann die Speicherleuchtstoffplatte 20, sofern sie eine für das Innere der Röntgenkassette 42 geeignete Größe und Form aufweist, auch ohne Aufnahmevorrichtung 28 in der Röntgenkassette 42 abgelegt sein.

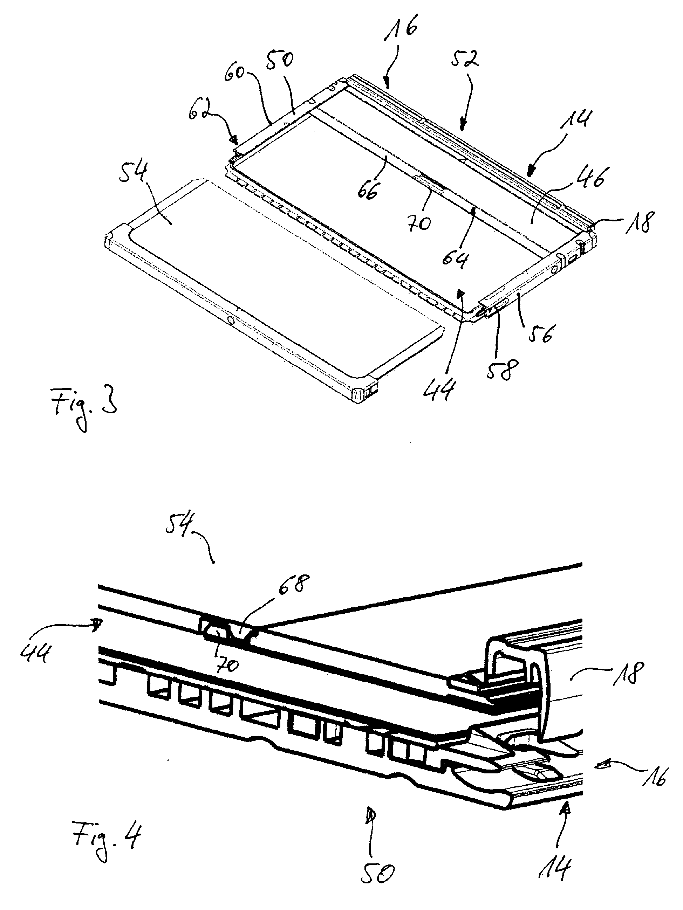

Fig. 3 zeigt eine Röntgenkassette 50 mit zwei Öffnungen 14 und 44 zum Einführen einer Speicherleuchtstoffplatte in die Röntgenkassette 50 und zum Herausnehmen der in der Röntgenkassette 50 befindlichen Speicherleuchtstoffplatte aus der Röntgenkassette 50. Die Öffnung 14 ist an der schmalen Frontfläche 16 der Röntgenkassette 50 ausgebildet und mittels des Verschlusses 18 öffen- und schließbar. Der Verschluss 18 ist hier im Wesentlichen L-förmig oder hakenförmig ausgestaltet und an einem Gelenk entlang eines Übergangs der Deckelfläche 46 der Röntgenkassette 50 zu der Frontfläche 16 verschwenkbar befestigt. Die Öffnung 44 ist in der Deckelfläche 46 ausgebildet. Im vorliegenden Ausführungsbeispiel ist die Öffnung 44 von dem Übergang der Deckelfläche 46 zu der Frontfläche 16 beabstandet und erstreckt sich bis auf einen linken und rechten Randbereich im Wesentlichen über die gesamte Breite der Röntgenkassette 50. Die Öffnung 44 umfasst hier ferner eine schmale Frontfläche 52, die der Frontfläche 16 gegenüberliegt. Die Öffnung 44 ist mittels eines abnehmbaren Deckelteils 54 als Verschluss 48 öffen- und verschließbar.

Als Verschlussmechanismus zum Öffnen und Verschließen der Öffnung 44 ist an einer schmalen Seitenfläche 56 der Röntgenkassette 50 eine Verschlussfeder 58 angebracht. Vorteilhafterweise ist an einer der Seitenfläche 56 gegenüberliegenden Seitenfläche 60 der Röntgenkassette 50 eine weitere Verschlussfeder 62 vorhanden. Dadurch wird die Funktionalität des Öffnens und Verschließens verbessert. An einer Verschlusskante 64, an der die Röntgenkassette 50 und ihr Deckelteil 54 in geschlossenem Zustand der Öffnung 44 aneinander treffen, ist an der Röntgenkassette 50 eine Blende angebracht, um die Lichtdichtheit der Röntgenkassette 50 in ihrem geschlossenen Zustand zu gewährleisten. Die Blende ist hier in Form eines schmalen Überlapps 66 realisiert, so dass sich dieser Überlapp 66 bei geschlossener Öffnung 44 im Bereich der Verschlusskante 64 unter das Deckelteil 54 erstreckt. Prinzipiell ist es auch möglich, die Blende anders auszugestalten. Beispielsweise kann der Überlapp 66 so angebracht sein, dass er sich bei geschlossener Öffnung 44 über das Deckelteil 54 erstreckt.

Zum sicheren und zuverlässigen Verschließen der Öffnung 44 durch das Deckelteil 54 sind in einem Bereich der Verschlusskante 64, an der die Röntgenkassette 50 und ihr Deckelteil 54 in geschlossenem Zustand der Öffnung 44 aneinandertreffen, in der Röntgenkassette 50 und dem Deckelteil 54 einander entgegengerichtete Rastnasen vorhanden. Diese entgegengerichtete Rastnasen greifen in geschlossenem Zustand der Öffnung 44 ineinander. Die Rastnasen können im Wesentlichen über die gesamte Breite der Verschlusskante 64 verlaufen. Es ist aber ebenso möglich, die Ausbreitung der Rastnasen auf einen Teil der Verschlusskante 64 zu begrenzen. Hier erstrecken sich die Rastnasen einfachheitshalber über einen Teilbereich der Verschlusskante 64, der in etwa in der Mitte der Breitenausdehnung der Verschlusskante 64 liegt. Die in der Röntgenkassette 50 vorhandene Rastnase ist vorteilhafterweise in dem Überlapp 66 ausgebildet.

Fig. 4 verdeutlicht diesen Verschlussmechanismus mittels der einander entgegengerichteten Rastnasen. Fig. 4 zeigt einen Ausschnitt eines Querschnitts der Röntgenkassette 50 nach Fig. 3 bei geschlossener Öffnung 44. Dargestellt ist eine nach unten gerichtete Rastnase 68 im Deckelteil 54 und eine nach oben gerichtete Rastnase 70 in der Röntgenkassette 50. Die beiden Rastnasen 68, 70 greifen in dem dargestellten geschlossenen Zustand der Öffnung 44 ineinander. Die Fig. 4 verdeutlicht ebenfalls den L-förmigen Verschluss 18 zum Verschließen der Öffnung 14 an der Frontfläche 16. In der Darstellung nach Fig. 4 befindet sich der Verschluss 18 nach oben geschwenkt in seinem geöffnetem Zustand. Die Öffnung 14 ist somit geöffnet.

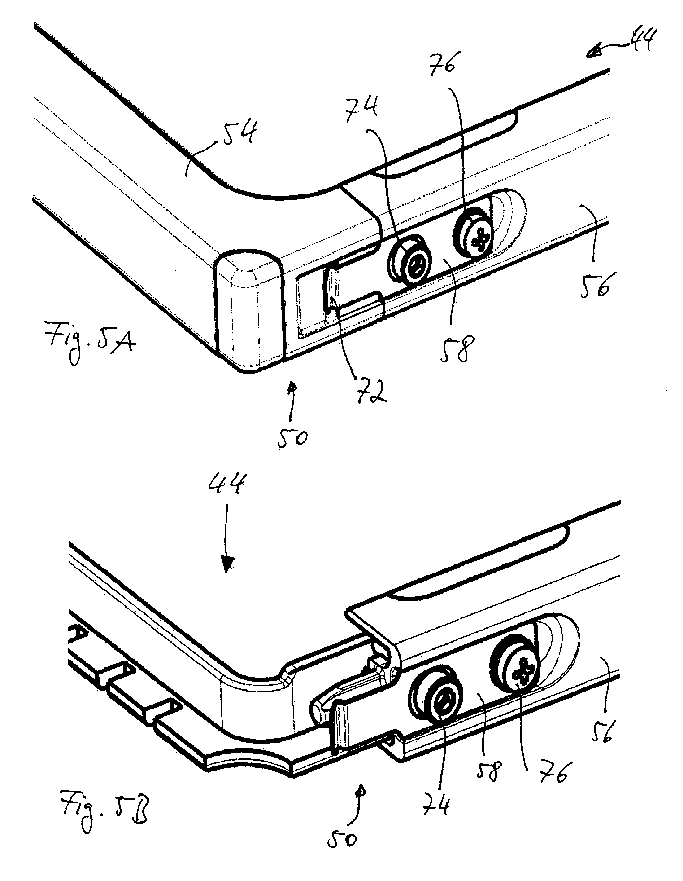

Fig. 5A und Fig. 5B verdeutlichen die Verschlussfeder 58 zum Verschließen des abnehmbaren Deckelteils 54 der Röntgenkassette 50 nach Fig. 3. Die Verschlussfeder 58 ist an der Seitenfläche 56 der Röntgenkassette 50 angebracht.

In der Darstellung nach Fig. 5A ist das Deckelteil 54 an der Röntgenkassette 50 befestigt, so dass die Öffnung 44 geschlossen ist. Die Verschlussfeder 58 ist in das Deckelteil 54 eingerastet. Dazu weist die Verschlussfeder 58 an ihrer Spitze eine Rastnase 72 auf. Diese Rastnase 72 greift in das Deckelteil 54 ein und arretiert dieses an der Röntgenkassette 50. Die Verschlussfeder 58 ist mittels zweier Schrauben 74 und 76 an der Röntgenkassette 50 befestigt. Wird die Verschlussfeder 58 nach innen, in Richtung des Inneren der Röntgenkassette 50 gedrückt, so löst sich die Rastnase 72 aus dem Deckelteil 54. Dieses kann dann von der Röntgenkassette 50 abgenommen werden. Die Darstellung nach Fig. 5B verdeutlicht die Ausgestaltung der Verschlussfeder 58. Fig. 5B zeigt einen Ausschnitt der Röntgenkassette 50 bei geöffneter Öffnung 44. Das Deckelteil 54 ist nicht an der Röntgenkassette 50 befestigt. Fig. 5B zeigt deutlich die Rastnase 72 der Verschlussfeder 58. Die Verschlussfeder 58 kann vorteilhafterweise eine geeignete Länge aufweisen, um dadurch die Kraft, die zum Lösen des Deckelteils 54 erforderlich ist, optimal einzustellen. Diese Kraft sollte nicht zu groß sein, um der Bedienperson ein einfaches Öffnen zu ermöglichen. Die ggf. an der Seitenfläche 60 angebrachte Verschlussfeder 62 entspricht vorteilhafterweise der Verschlussfeder 58.

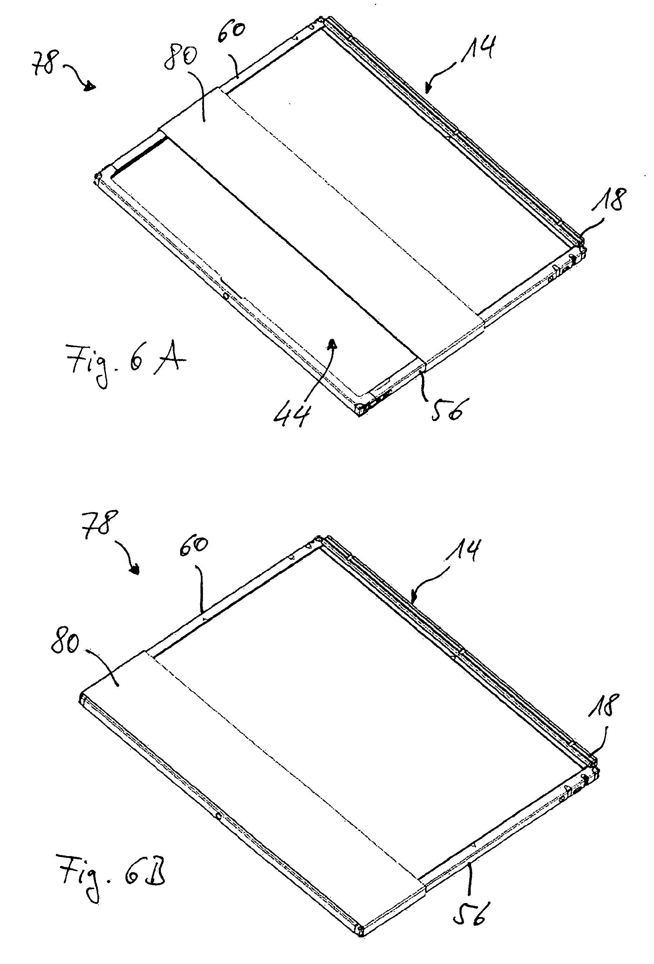

Fig. 6A und Fig. 6B zeigen eine Röntgenkassette 78 mit einem verschiebbaren Deckelteil 80 als Verschluss 48 ihrer Öffnung 44. Das Deckelteil 80 erstreckt sich hier über die gesamte Breite der Röntgenkassette 78. Das Deckelteil 80 ist an den Seitenflächen 56 und 60 verschiebbar gelagert und kann senkrecht zur Breitenausdehnung der Röntgenkassette 78 entlang ihrer Deckelfläche verschoben werden. Fig. 6A zeigt die Röntgenkassette 78 mit geöffneter Öffnung 44 und Fig. 6B mit geschlossener Öffnung 44.

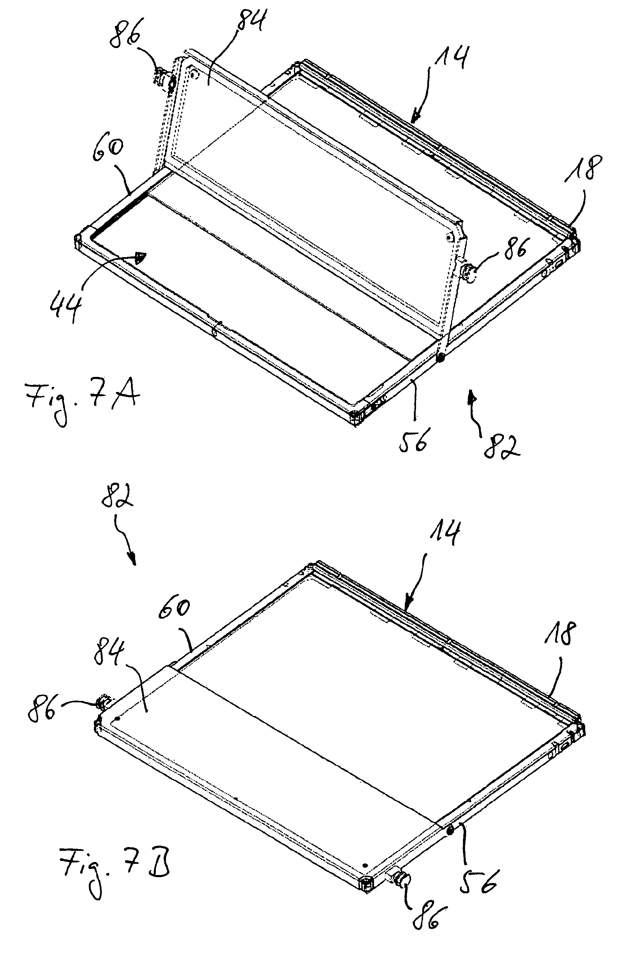

Fig. 7A und Fig. 7B zeigen eine Röntgenkassette 82 mit einem verschwenkbaren Deckelteil 84 als Verschluss 48 ihrer Öffnung 44. Das Deckelteil 84 ist an den beiden gegenüberliegenden Seitenflächen 56, 60 der Röntgenkassette 82 schwenkbar gelagert. Fig. 7A zeigt die Röntgenkassette 82 mit geöffneter Öffnung 44 und Fig. 7B mit geschlossener Öffnung 44. An dem Deckelteil 84 sind vorteilhafterweise zwei Rastverschlüsse 86 angeordnet, die in geschlossenem Zustand des Deckelteils 84 in korrespondierende Löcher eingreifen, die in den Seitenflächen 56, 60 vorhanden sind.

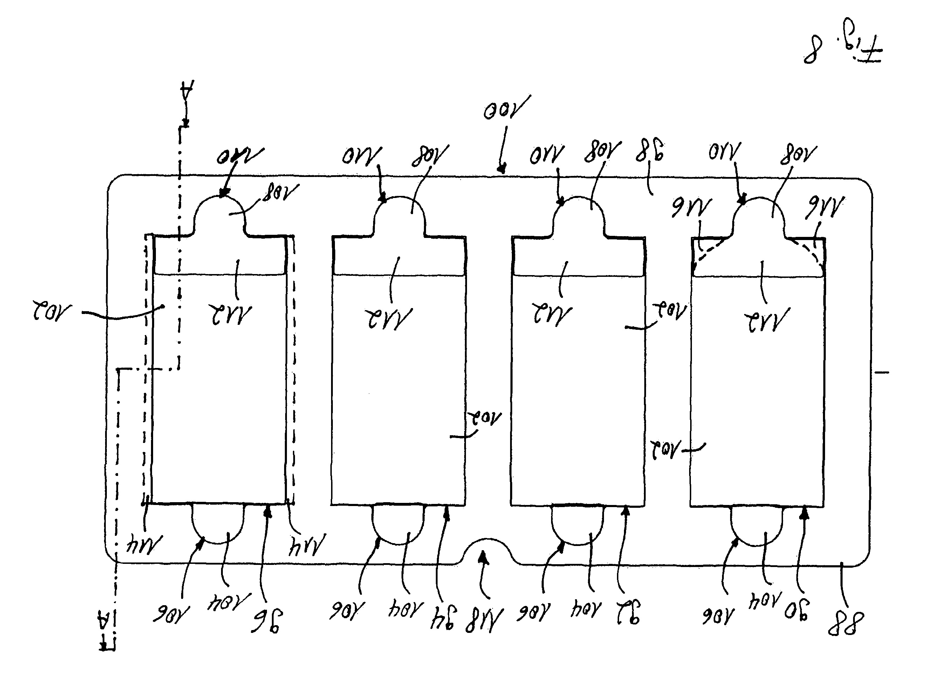

Fig. 8 zeigt eine Draufsicht auf eine Aufnahmevorrichtung 88 zum Aufnehmen von mehreren Speicherleuchtstoffplatten. Im vorliegenden Ausführungsbeispiel kann die Aufnahmevorrichtung 88 beispielhaft vier Speicherleuchtstoffplatten aufnehmen. Dazu weist sie mehrere, d. h. hier vier, Aufnahmeräume 90, 92, 94 und 96 auf, deren Maße und Geometrien an die von ihnen aufzunehmenden Speicherleuchtstoffplatten angepasst sind. Hier haben die Aufnahmeräume 90, 92, 94, 96 jeweils eine rechteckige Geometrie für entsprechend rechteckig ausgestaltete, symmetrische Speicherleuchtstoffplatten. Die Aufnahmevorrichtung 88 weist eine Abdeckplatte 98 und eine unter dieser befindliche Grundplatte 100 auf. Die Abdeckplatte 98 und die Grundplatte 100 sind voneinander beabstandet und außerhalb der Aufnahmeräume 90, 92, 94, 96 über eine zwischen ihnen angeordnete Zwischenschicht miteinander verbunden. Für jeden der Aufnahmeräume 90, 92, 94 und 96 weist die Abdeckplatte 98 eine erste Aussparung 102 auf, so dass die Abdeckplatte 98 hier vier erste Aussparungen 102 aufweist. Die ersten Aussparungen 102 gewährleisten, dass bei von den Aufnahmeräumen 90, 92, 94, 96 aufgenommenen Speicherleuchtstoffplatten deren Speicherleuchtstoffschichten im Wesentlichen nicht verdeckt und frei zugänglich sind. Die ersten Aussparungen 102 haben vorteilhafterweise im Wesentlichen die Größen der Speicherleuchtstoffschichten und befinden sich bei aufgenommenen Speicherleuchtstoffplatten über den Oberflächen der Speicherleuchtstoffschichten der aufgenommenen Speicherleuchtstoffplatten.

In der Abdeckplatte 98 sind den Aufnahmeräumen 90, 92, 94 und 96 zugeordnete zweite Aussparungen 104 vorhanden, die hier an die Kopfseiten der ersten Aussparungen 102 angrenzen. Des Weiteren sind in der Grundplatte 100 den Aufnahmeräumen 90, 92, 94, 96 zugeordnete dritte Aussparungen 106 vorhanden, die sich unterhalb den zweiten Aussparungen 104 befinden. Zusammen mit in der Zwischenschicht vorhandenen Aussparungen ergeben sich somit an den Kopfseiten der ersten Aussparungen 102 vollständige Durchgänge durch die Aufnahmevorrichtung 88. In der Abdeckplatte 98 sind ferner den Aufnahmeräumen 90, 92, 94 und 96 zugeordnete vierte Aussparungen 108 vorhanden, die hier an die Fußseiten der ersten Aussparungen 102 angrenzen. In der Grundplatte 100 sind darüberhinaus den Aufnahmeräumen 90, 92, 94 und 96 zugeordnete fünfte Aussparungen 110 vorhanden, die sich unterhalb der vierten Aussparungen 108 befinden. Zusammen mit in der Zwischenschicht vorhandenen weiteren Aussparungen ergeben sich somit ebenfalls an den Fußseiten der ersten Aussparungen 102 vollständige Durchgänge durch die Aufnahmevorrichtung 88. Die vollständigen Durchgänge durch die Aufnahmevorrichtung 88 an den Kopfseiten und den Fußseiten der ersten Aussparungen ermöglichen vorteilhafterweise ein einfaches, sicheres und bequemes Zuführen der Speicherleuchtstoffplatten in die Aufnahmeräume 90, 92, 94, 96 sowie ein einfaches, sicheres und bequemes Entnehmen der Speicherleuchtstoffplatten aus den Aufnahmeräumen 90, 92, 94, 96. Die Durchgänge und die sie bildenden Aussparungen weisen hier vorteilhafterweise einen Teilkreis auf, der ein besonders komfortables Erfassen der Speicherleuchtstoffplatte insbesondere durch die Bedienperson ermöglicht.

In der Grundplatte 100 sind den Aufnahmeräumen 90, 92, 94 und 96 zugeordnete sechste Aussparungen 112 vorhanden, die zum einfachen und zuverlässigen Zuführen der Speicherleuchtstoffplatten zu und zum Entnehmen der Speicherleuchtstoffplatten aus den Aufnahmeräumen 90, 92, 94, 96 dienen. Die sechsten Aussparungen 112 grenzen hier unmittelbar an die fünften Aussparungen 110 an und befinden sich unterhalb der ersten Aussparungen 102. Dadurch ergibt sich auch bei den sechsten Aussparungen 112 ein vollständiger Durchgang durch die Aufnahmevorrichtung 88. Die sechsten Aussparungen 112 erstrecken sich im Wesentlichen über die gesamte Breite der Aufnahmeräume 90, 92, 94, 96 und sind hier rechteckförmig. Sie können aber auch eine andere geeignete Form haben.

Die Abdeckplatte 98 und die Grundplatte 100 sind so mittels der Zwischenschicht miteinander verbunden, dass entlang der einander gegenüberliegenden Längsseiten der Aufnahmeräume 90, 92, 94, 96 zwischen der Abdeckplatte 98 und der Grundplatte 100 schienenförmige Leerräume 114 zum jeweiligen Aufnehmen eines Randbereichs der Speicherleuchtstoffplatten vorhanden sind. In der Fig. 8 sind stellvertretend die schienenförmigen Leerräume 114 des Aufnahmeraums 96 dargestellt. In diesen schienenförmigen Leerräumen 114 können die Speicherleuchtstoffplatten bequem zum Ein- und Ausführen verschoben werden. Gleichzeitig werden die in den Aufnahmeräumen 90, 92, 94, 96 befindlichen Speicherleuchtstoffplatten sicher gehalten. Dies ist insbesondere bei der weiteren Verarbeitung der in der Aufnahmevorrichtung 88 gehaltenen Speicherleuchtstoffplatten in einer Auslesevorrichtung, wie derjenigen der Auslesevorrichtung 34 (Fig. 2), vorteilhaft. Insbesondere für eine solche weitere Verarbeitung der Speicherleuchtstoffplatten ist die Aufnahmevorrichtung 88 aus einem flexiblen Material, insbesondere einem flexiblen Kunststoffmaterial. Dies ermöglicht vorteilhafterweise leichte Verbiegungen der Aufnahmevorrichtung 88. Um ein noch besseres Halten der Speicherleuchtstoffplatten in den Aufnahmeräumen 90, 92, 94, 96 zu erreichen, können in Randbereichen der ersten Aussparungen 102, insbesondere im Bereich ihrer Fußseiten, kleine Überlappe 116 in der Abdeckplatte 98 ausgebildet sein. Überlappe 116 sind vor allem über den sechsten Aussparungen 112 vorteilhaft. In der Fig. 8 sind solche Überlappe 116 beispielhaft bei dem Aufnahmeraum 90 angedeutet. Überlappe 116 können auch bei den anderen Aufnahmeräumen 92, 94, 96 vorhanden sein. Zum zuverlässigen und einfachen Erfassen der Aufnahmevorrichtung 88, insbesondere durch die Bedienperson, weist die Aufnahmevorrichtung 88 eine Einkerbung 118 an einer Längsseite auf.

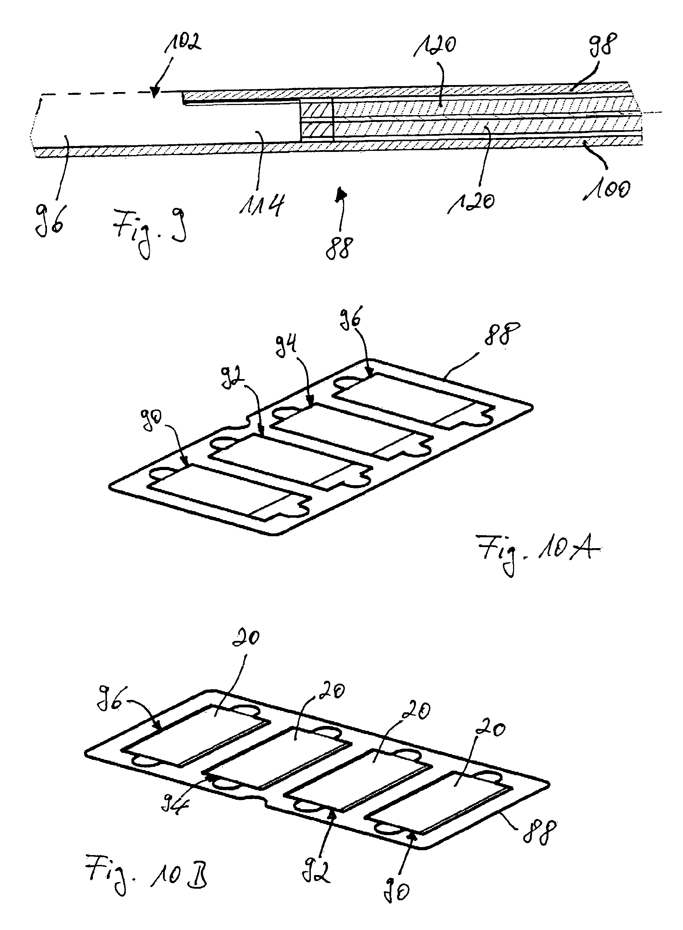

Fig. 9 zeigt beispielhaft eine Querschnittsansicht der Aufnahmevorrichtung 88 nach Fig. 8 entlang des Schnitts A-A. Dargestellt ist die Abdeckplatte 98, die über eine Zwischenschicht 120 mit der Grundplatte 100 verbunden ist. Über dem Aufnahmeraum 96 befindet sich in der Abdeckplatte 98 die erste Aussparung 102. An der Längsseite des Aufnahmeraums 96 ist der schienenförmige Leerraum 114 zu sehen, der von der Abdeckplatte 98 überdeckt wird. Dadurch wird ein zuverlässigen Halten der Speicherleuchtstoffplatte in dem Aufnahmeraum 96 gewährleistet.

Fig. 10A und Fig. 10B zeigen perspektivische Ansichten auf die Oberseite der Aufnahmevorrichtung 88 nach Fig. 8. Fig. 10A zeigt die Aufnahmevorrichtung 88 ohne aufgenommene Speicherleuchtstoffplatten. Fig. 10B zeigt die Aufnahmevorrichtung 88 mit aufgenommenen Speicherleuchtstoffplatten 20.

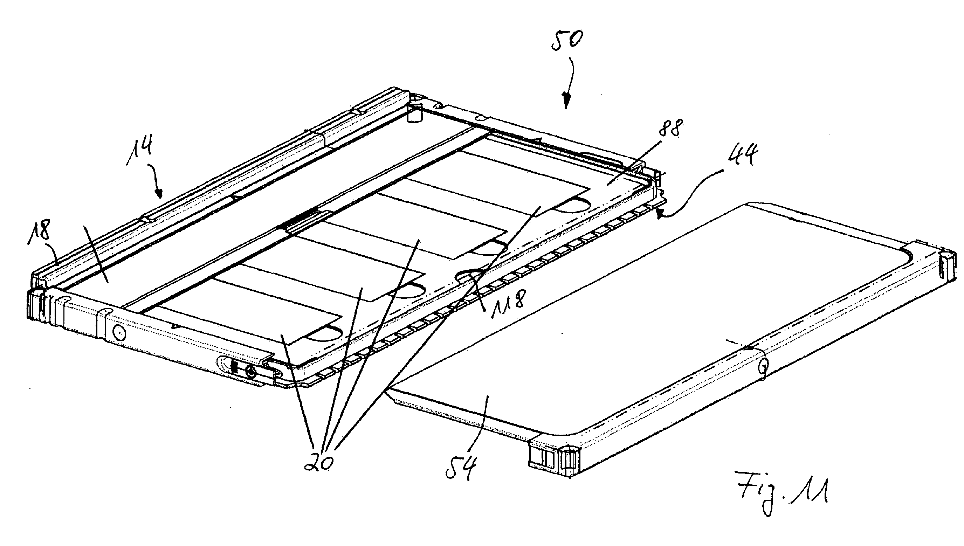

Fig. 11 zeigt eine weitere schematische Darstellung der Röntgenkassette 50 nach Fig. 3 mit einer in ihrem Innern befindlichen Aufnahmevorrichtung 88 nach Fig. 8. In der Darstellung nach Fig. 11 ist das Deckelteil 54 von der Röntgenkassette 50 abgenommen, so dass die Öffnung 44 offen ist. In den Aufnahmeräumen 90, 92, 94, 96 der Aufnahmevorrichtung 88 befinden sich in dieser Darstellung Speicherleuchtstoffplatten 20. Bei geöffnetem Deckelteil 54 kann die Aufnahmevorrichtung 88 auf einfache Weise insbesondere von einer Bedienperson aus der Röntgenkassette 50 entnommen werden. Dazu ist die dargestellte Einkerbung 118 der Aufnahmevorrichtung 88 besonders praktisch.

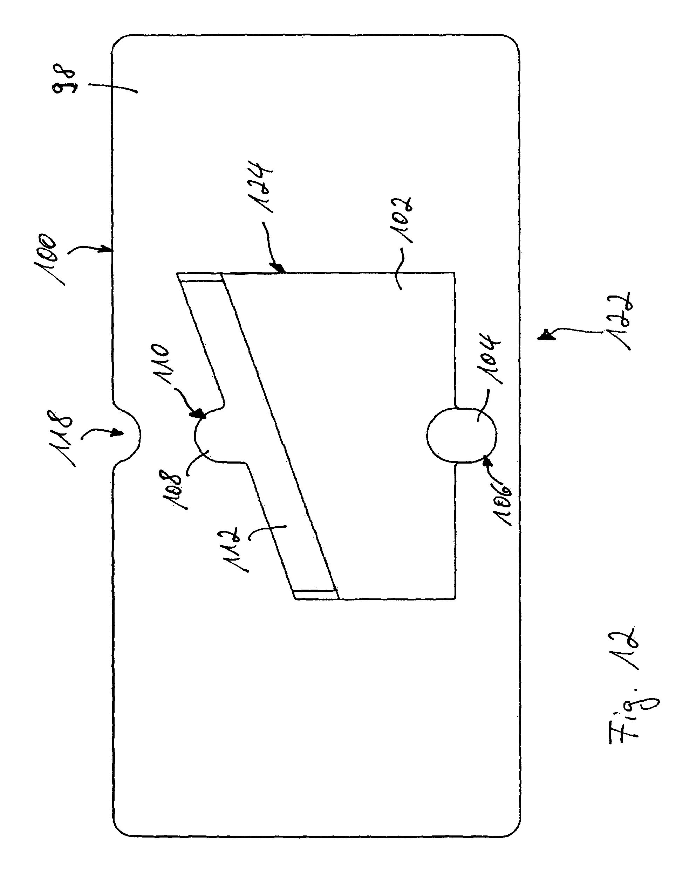

Fig. 12 zeigt eine Draufsicht auf eine Aufnahmevorrichtung 122 mit einem Aufnahmeraum 124 für eine Speicherleuchtstoffplatte. Der Aufnahmeraum 124 hat hier eine asymmetrische Form, um zu verdeutlichen, dass prinzipiell Speicherleuchtstoffplatten beliebiger Form von einer entsprechend gestalteten Aufnahmevorrichtung aufgenommen werden können. Das Prinzip der Anordnung und Ausgestaltung der verschiedenen Aussparungen 102, 104, 106, 108, 110 und 112 von Abdeckplatte 98 und Grundplatte 100 entspricht weitgehend demjenigen der Aufnahmevorrichtung 88. Es wird somit hier nicht weiter darauf eingegangen und diesbezüglich auf deren obige Beschreibung verwiesen.

Im Folgenden wird ein Beispiel für einen typischen erfindungsgemäßen Arbeitsablauf unter Bezugnahme auf die Figuren 2 und 8 bis 12 näher erläutert.

Nach einer Röntgenaufnahme wird eine Aufnahmevorrichtung 28, 88, 122 mit einer oder mehreren Speicherleuchtstoffplatten 20 bestückt, indem diese von einer Bedienperson in den bzw. die Aufnahmeräume 90, 92, 94, 96, 124 in der Aufnahmevorrichtung 28, 88, 122 geschoben, gesteckt und/oder gelegt werden.

Anschließend führt die Bedienperson die bestückte Aufnahmevorrichtung 28, 88, 122 in die Röntgenkassette 42, 50, 78, 82 ein, und zwar durch eine erste Öffnung 44 der Röntgenkassette 42, 50, 78, 82 hindurch. Die Röntgenkassette 42, 50, 78, 82 kann hierbei bereits mit ihrer zweiten Öffnung 14 in die Eingabeeinrichtung 32 einer Auslesevorrichtung 34 eingelegt sein, wobei die Eingabeeinrichtung 32 so ausgestaltet ist, dass die Bedienperson bei eingelegter Röntgenkassette 42, 50, 78, 82 auf die erste Öffnung 44 bequem zugreifen kann. Der Verschluss 48, 54, 80, 84 der ersten Öffnung 44 wird dann geschlossen.

Die bestückte Aufnahmevorrichtung 28, 88, 122 wird dann durch die zweite Öffnung 14 der in die Eingabeeinrichtung 32 der Auslesevorrichtung 34 eingegeben Röntgenkassette 42, 50, 78, 82 hindurch in die Ausleseeinrichtung 34 hinein transportiert und zu einem in der Ausleseeinrichtung 34 befindlichen Scanner befördert, an welchem die Speicherleuchtstoffplatte 20 ausgelesen wird, während sich diese in der Aufnahmevorrichtung 28, 88, 122 befindet. Vorzugsweise werden anschließend etwaige in den Speicherleuchtstoffplatten 20 verbliebene Restinformationen durch Bestrahlen mit Löschstrahlung gelöscht.

Nach dem Auslesen wird die bestückte Aufnahmevorrichtung 28, 88, 122 wieder durch die zweite Öffnung 14 der in der Eingabeeinrichtung 32 der Auslesevorrichtung 34 befindlichen Röntgenkassette 42, 50, 78, 82 hindurch in diese zurückgeführt.

Die Aufnahmevorrichtung 28, 88, 122 wird dann von der Bedienperson durch die erste Öffnung 44 der Röntgenkassette 42, 50, 78, 82 hindurch aus dieser entnommen. Schließlich können die ausgelesenen Speicherleuchtstoffplatten 20 aus der Aufnahmevorrichtung 28, 88, 122 entfernt werden und stehen für weitere Röntgenaufnahmen zur Verfügung.

## Patentansprüche

1. Verfahren zum Auslesen von Speicherleuchtstoffplatten mit folgenden Schritten:
- Bestücken einer Aufnahmevorrichtung (28, 88, 122) mit mindestens einer Speicherleuchtstoffplatte (20) und Einführen der bestückten Aufnahmevorrichtung (28, 88, 122) in eine Röntgenkassette (42, 50, 78, 82) durch eine erste Öffnung (44) der Röntgenkassette (42, 50, 78, 82) hindurch,
- Entnahme der bestückten Aufnahmevorrichtung (28, 88, 122) aus der Röntgenkassette (42, 50, 78, 82) durch eine zweite Öffnung (14) der Röntgenkassette (42, 50, 78, 82), welche in einer Auslesevorrichtung (34) eingegeben ist, hindurch und Auslesen der in der entnommenen Aufnahmevorrichtung (28, 88, 122) befindlichen Speicherleuchtstoffplatte (20),
- Rückführen der bestückten Aufnahmevorrichtung (28, 88, 122) in die in der Auslesevorrichtung (34) eingegeben Röntgenkassette (42, 50, 78, 82) durch die zweite Öffnung (14) der Röntgenkassette (42, 50, 78, 82) hindurch und
- Entnahme der Aufnahmevorrichtung (28, 88, 122) aus der Röntgenkassette (42, 50, 78, 82) durch die erste Öffnung (44) der Röntgenkassette (42, 50, 78, 82) hindurch.

2. Verfahren nach Anspruch 1, wobei nach der Entnahme der Aufnahmevorrichtung (28, 88, 122) aus der Röntgenkassette (42, 50, 78, 82) die ausgelesene Speicherleuchtstoffplatte (20) aus der Aufnahmevorrichtung (28, 88, 122) entnommen wird.

3. Verfahren nach Anspruch 1 oder 2, wobei die Aufnahmevorrichtung (28, 88, 122) mit mindestens einer Speicherleuchtstoffplatte (20) bestückt wird, indem diese von einer Bedienperson in mindestens einen in der Aufnahmevorrichtung (28, 88, 122) vorgesehenen Aufnahmerraum (90, 92, 94, 96, 124) geschoben, gesteckt und/oder gelegt wird.

4. Verfahren nach einem der vorangehenden Ansprüche, wobei die bestückte Aufnahmevorrichtung (28, 88, 122) durch eine Bedienperson durch die erste Öffnung (44) der Röntgenkassette (42, 50, 78, 82) hindurch in die Röntgenkassette (42, 50, 78, 82) eingeführt wird.

5. Verfahren nach Anspruch 4, wobei die Röntgenkassette (42, 50, 78, 82) mit ihrer zweiten Öffnung (14) in einer Eingabeeinrichtung (32) der Auslesevorrichtung (34) bereits eingelegt ist, wenn die Bedienperson die bestückte Aufnahmevorrichtung (28, 88, 122) in die Röntgenkassette (42, 50, 78, 82) einführt.

6. Verfahren nach einem der vorangehenden Ansprüche, wobei die Speicherleuchtstoffplatte (20) ausgelesen wird, während sich diese in der entnommenen Aufnahmevorrichtung (28, 88, 122) befindet.

7. Verfahren nach einem der vorangehenden Ansprüche, wobei die Aufnahmevorrichtung (28, 88, 122) durch eine Bedienperson aus der Röntgenkassette (42, 50, 78, 82) durch die erste Öffnung (44) der Röntgenkassette (42, 50, 78, 82) hindurch entnommen wird.

8. Verfahren nach einem der vorangehenden Ansprüche, wobei vor dem Bestücken der Aufnahmevorrichtung (28, 88, 122) ein Röntgenbild auf der mindestens einen Speicherleuchtstoffplatte (20) aufgezeichnet wird.

9. Verfahren nach Anspruch 8, wobei ein medizinisches, insbesondere zahnmedizinisches, Röntgenbild auf der mindestens einen Speicherleuchtstoffplatte (20) aufgenommen wird.

10. Verfahren nach Anspruch 8, wobei ein Röntgenbild eines Objekts, insbesondere einer Schweißnaht, zur zerstörungsfreien Prüfung (NDT) des Objekts auf der mindestens einen Speicherleuchtstoffplatte (20) aufgenommen wird.

## Claims

1. A method for reading out storage phosphor plates comprising the following steps:
- equipping a holding apparatus (28, 88, 122) with at least one storage phosphor plate (20) and introducing the equipped holding apparatus (28, 88, 122) into an X-ray cassette (42, 50, 78, 82) through a first opening (44) of the X-ray cassette (42, 50, 78, 82),
- removing the equipped holding apparatus (28, 88, 122) from the X-ray cassette (42, 50, 78, 82) through a second opening (14) of the X-ray cassette (42, 50, 78, 82) which is inserted into a read-out apparatus (34), and reading out the storage phosphor plate (20) located in the removed holding apparatus (28, 88, 122),
- replacing the equipped holding apparatus (28, 88, 122) in the X-ray cassette (42, 50, 78, 82) inserted into the read-out apparatus (34) through the second opening (14) of the X-ray cassette (42, 50, 78, 82), and
- removing the holding apparatus (28, 88, 122) from the X-ray cassette (42, 50, 78, 82) through the first opening (44) of the X-ray cassette (42, 50, 78, 82).

2. The method according to Claim 1, after removing the holding apparatus (28, 88, 122) from the X-ray cassette (42, 50, 78, 82) the read out storage phosphor plate (20) being removed from the holding apparatus (28, 99, 122).

3. The method according to Claim 1 or 2, the holding apparatus (28, 88, 122) being equipped with at least one storage phosphor plate (20), the latter being pushed, placed and/or laid by an operator into/in at least one holding space (90, 92, 94, 96, 124) provided in the holding apparatus (28, 88, 122).

4. The method according to any of the preceding claims, the equipped holding apparatus (28, 88, 122) being introduced into the X-ray cassette (42, 50, 78, 82) by an operator through the first opening (44) of the X-ray cassette (42, 50, 78, 82).

5. The method according to Claim 4, the X-ray cassette (42, 50, 78, 82) with its second opening (14) already being inserted in an insertion device (32) of the read-out apparatus (34) when the operator introduces the equipped holding apparatus (28, 88, 122) into the X-ray cassette (42, 50, 78, 82).

6. The method according to any of the preceding claims, the storage phosphor plate (20) being read out while the latter is located in the removed holding apparatus (28, 88, 122).

7. The method according to any of the preceding claims, the holding apparatus (28, 88, 122) being removed by an operator from the X-ray cassette (42, 50, 78, 82) through the first opening (44) of the X-ray cassette (42, 50, 78, 82).

8. The method according to any of the preceding claims, an X-ray image being recorded on the at least one storage phosphor plate (20) before equipping the holding apparatus (28, 88, 122).

9. The method according to Claim 8, a medical, in particular a dental, X-ray image being recorded on the at least one storage phosphor plate (20).

10. The method according to Claim 8, an X-ray image of an object, in particular of a weld seam, being recorded on the at least one storage phosphor plate (20) for non-destructive testing (NDT) of the object.

## Revendications

1. Procédé de lecture de plaques photostimulables présentant les étapes suivantes :
- garnir un dispositif de réception (28, 88, 122) en utilisant au moins une plaque photostimulable (20) et introduire le dispositif de réception (28, 88, 122) garni dans une cassette radiographique (42, 50, 78, 82) par une première ouverture (44) de la cassette radiographique (42, 50, 78, 82),
- retirer le dispositif de réception (28, 88, 122) garni hors de la cassette radiographique (42, 50, 78, 82) par une deuxième ouverture (14) de la cassette radiographique (42, 50, 78, 82), qui est insérée dans un dispositif de lecture (34), et lire la plaque photostimulable (20) qui se trouve dans le dispositif de réception (28, 88, 122) retiré,
- renvoyer le dispositif de réception (28, 88, 122) garni dans la cassette radiographique (42, 50, 78, 82), insérée dans le dispositif de lecture (34), par la deuxième ouverture (14) de la cassette radiographique (42, 50, 78, 82), et
- retirer le dispositif de réception (28, 88, 122) hors de la cassette radiographique (42, 50, 78, 82) par la première ouverture (44) de la cassette radiographique (42, 50, 78, 82).

2. Procédé selon la revendication 1, dans lequel, suite au retrait du dispositif de réception (28, 88, 122) hors de la cassette radiographique (42, 50, 78, 82), la plaque photostimulable (20) lue est retirée du dispositif de réception (28, 88, 122).

3. Procédé selon la revendication 1 ou 2, dans lequel le dispositif de réception (28, 88, 122) est garni d'au moins une plaque photostimulable (20) par un opérateur qui la pousse, l'enfonce ou la pose dans au moins un espace de réception (90, 92, 94, 96, 124) prévu dans le dispositif de réception (28, 88, 122).

4. Procédé selon l'une des revendications précédentes, dans lequel le dispositif de réception (28, 88, 122) garni est introduit par un opérateur dans la cassette radiographique (42, 50, 78, 82) par la première ouverture (44) de la cassette radiographique (42, 50, 78, 82).

5. Procédé selon la revendication 4, dans lequel la cassette radiographique (42, 50, 78, 82) est déjà insérée par sa deuxième ouverture (14) dans un dispositif d'entrée (32) du dispositif de lecture (34) lorsque l'opérateur introduit le dispositif de réception (28, 88, 122) dans la cassette radiographique (42, 50, 78, 82).

6. Procédé selon l'une des revendications précédentes, dans lequel la plaque photostimulable (20) est lue pendant qu'elle se trouve dans le dispositif de réception (28, 88, 122).

7. Procédé selon l'une des revendications précédentes, dans lequel le dispositif de réception (28, 88, 122) est retiré par un opérateur hors de la cassette radiographique (42, 50, 78, 82) par la première ouverture (44) de la cassette radiographique (42, 50, 78, 82).

8. Procédé selon l'une des revendications précédentes, dans lequel une image radiographique est enregistrée sur l'au moins une plaque photostimulable (20) avant la garniture du dispositif de réception (28, 88, 122).

9. Procédé selon la revendication 8, dans lequel une image radiographique médicale, notamment dentaire, est enregistrée sur l'au moins une plaque photostimulable (20).

10. Procédé selon la revendication 8, dans lequel une image radiographique d'un objet, notamment d'une ligne de soudure, est enregistrée sur l'au moins une plaque photostimulable (20) pour permettre le contrôle non destructif (CND) de l'objet.
